# EUROPÄISCHE PATENTANMELDUNG

(11) **EP 3 451 284 A1**
(43) Veröffentlichungstag der Anmeldung: **06.03.2019**
(21) Anmeldenummer: 17189328.2
(22) Anmeldetag: 05.09.2017
(51) Int. Cl.: G06T 7/00

(54) **VERFAHREN ZUR AUTOMATISCHEN ARTEFAKTERKENNUNG IN COMPUTERTOMOGRAPHISCHEN BILDDATEN**

(71) Anmelder: Siemens Healthcare GmbH, 91052 Erlangen (DE)
(72) Erfinder: Allmendinger, Thomas, 91301 Forchheim (DE)

(57) **Zusammenfassung**

Die Erfindung betrifft ein Verfahren (S1) zur Artefakterkennung in computertomographischen Bilddaten aufweisend die Schritte des Aufnehmens (S11) von Projektionsmessdaten eines Untersuchungsbereichs eines zu untersuchenden Objekts (39), des Rekonstruierens (S12) von Bilddaten basierend auf den Projektionsmessdaten, des Prüfens (S13) auf Vorhandensein eines Artefakts in den Bilddaten mittels einer trainierten Erkennungseinheit, des Erkennens (S14) einer Artefaktart eines vorhandenen Artefakts mittels einer trainierten Erkennungseinheit, und des Ausgebens (S15) der erkannten Artefaktart.

## Beschreibung

Die Erfindung betrifft ein Verfahren zur Artefakterkennung, ein Verfahren zum Trainieren einer Erkennungseinheit sowie eine Recheneinheit, ein Computertomographiesystem, ein Computerprogrammprodukt, ein computerlesbares Medium, eine Trainingseinheit, ein weiteres Computerprogrammprodukt und ein weiteres computerlesbares Medium.

Die Computertomographie ist ein bildgebendes Verfahren, welches vor allem zur medizinischen Diagnostik sowie zur Materialuntersuchung eingesetzt wird. Bei der Computertomographie rotieren zur Aufnahme räumlich dreidimensionaler Bilddaten eine Strahlungsquelle, beispielsweise eine Röntgenquelle, sowie eine mit diesem zusammen wirkende Detektorvorrichtung um ein zu untersuchendes Objekt. Während der Rotationsbewegung werden innerhalb eines Winkelsektors Messdaten aufgenommen. Bei den Projektionsmessdaten handelt es sich um eine Vielzahl von Projektionen, welche Informationen über die Schwächung der Strahlung durch das Untersuchungsobjekt aus verschiedenen Projektionswinkeln enthalten. Aus diesen Projektionen lässt sich ein zweidimensionales Schnittbild oder ein dreidimensionales Volumenbild des Untersuchungsobjektes berechnen. Die Projektionsmessdaten werden auch als Rohdaten bezeichnet bzw. die Projektionsmessdaten können bereits vorverarbeitet sein, so dass beispielsweise detektorbedingte Intensitätsunterschiede der Schwächung reduziert sind. Aus diesen Projektionsmessdaten können dann Bilddaten rekonstruiert werden, beispielsweise mittels der sogenannten gefilterten Rückprojektion oder mittels eines iterativen Rekonstruktionsverfahrens. Bewegt sich das Untersuchungsobjekt beispielsweise während der Aufnahme, so können bei der Rekonstruktion der Bilddaten Unschärfe und Artefakte aufgrund der Bewegung entstehen.

Vielfältige Verfahren zur Abtastung eines Untersuchungsobjektes mit einem Computertomographiesystem sind bekannt. Es werden beispielsweise Kreisabtastungen, sequentielle Kreisabtastungen mit Vorschub oder Spiralabtastungen angewandt. Auch andersartige Abtastungen, die nicht auf Kreisbewegungen beruhen, sind möglich, so z.B. Scans mit linearen Segmenten. Es werden mit Hilfe mindestens einer Röntgenquelle und mindestens einer gegenüberliegenden Detektorvorrichtung Absorptionsdaten des Untersuchungsobjektes aus unterschiedlichen Aufnahmewinkeln aufgenommen und diese so gesammelten Absorptionsdaten bzw. Projektionsmessdaten mittels entsprechender Rekonstruktionsverfahren zu Schnittbildern durch das Untersuchungsobjekt verrechnet.

Zur Rekonstruktion von computertomographischen Bildern aus den Projektionsmessdaten eines Computertomographiesystems, wird heutzutage als Standardverfahren ein so genanntes gefiltertes Rückprojektionsverfahren (Filtered Back Projection; FBP) oder eine iterative Rekonstruktion eingesetzt. Bei gefilterten Rückprojektionsverfahren können aufgrund ihrer approximativen Arbeitsweise Probleme mit so genannten Kegelstrahl-Artefakten, Spiralartefakten, Abtastartefakte, Faltungsratefakte und limited-view-Artefakten entstehen. Das gefilterte Rückprojektionsverfahren gehört zur Gruppe der approximativen Rekonstruktionsverfahren. Es existiert ferner die Gruppe der exakten Rekonstruktionsverfahren, welche jedoch derzeit kaum eingesetzt werden. Eine dritte Gruppe von Rekonstruktionsverfahren bilden die iterativen Verfahren.

Mit iterativen Rekonstruktionsverfahren können zumindest manche der oben genannten Limitationen der gefilterten Rückprojektion beseitigt werden. Bei einem solchen iterativen Rekonstruktionsverfahren erfolgt zunächst eine Rekonstruktion von Startbilddaten aus den Projektionsmessdaten. Hierzu kann beispielsweise ein gefiltertes Rückprojektionsverfahren verwendet werden. Das iterative Rekonstruktionsverfahren erzeugt im Anschluss nach und nach verbesserte Bilddaten. Beispielsweise können aus den Startbilddaten mit einem "Projektor", einem Projektionsoperator, welcher das Messsystem mathematisch möglichst gut abbilden sollte, synthetische Projektionsdaten erzeugt werden. Die Differenz zu den Messsignalen wird dann mit dem zu dem Projektor adjungierten Operator rückprojiziert und es wird so ein Residuum-Bild rekonstruiert, mit dem das initiale Bild aktualisiert wird. Die aktualisierten Bilddaten können wiederum verwendet werden, um in einem nächsten Iterationsschritt mit Hilfe des Projektionsoperators neue synthetische Projektionsdaten zu erzeugen, daraus wieder die Differenz zu den Messsignalen zu bilden und ein neues Residuum-Bild zu berechnen, mit dem wieder die Bilddaten der aktuellen Iterationsstufe verbessert werden usw. Beispiele für iterative Rekonstruktionsverfahren sind die algebraische Rekonstruktionstechnik (ART), die simultane algebraische Rekonstruktionstechnik (SART), die iterierte gefilterte Rückprojektion (IFBP), oder auch statistische iterative Bildrekonstruktionstechniken.

Der Erfinder hat als Problem erkannt, dass es bei der Benutzung von Computertomographiesystemen durch technische Defekte einzelner Komponenten, beispielsweise einem Detektorkanal oder einem Detektormodul, der Alterung oder ein teilweiser Ausfall der Detektors oder durch physikalisch bedingte Effekte wie beispielsweise der Strahlaufhärtung, dem Kegelstrahl-Effekt, der Röntgenstreuung, der Bewegung des Patienten und anderen, zu Artefakten in den Bilddaten kommen kann. Die Artefakte können für den geschulten Radiologen zwar als solche in der Regel zu erkennen sein, allerdings findet der Radiologe normalerweise keine geeignete Antwort in Bezug auf die Ursache. Dadurch wird häufig ein Service-Techniker oder einem Applikationsspezialisten befragt. Bei einem echten Defekt des Geräts kann der Aufwand gerechtfertigt sein, häufig sind aber einfache der computertomographischen Bildgebung intrinsische Effekte für das Artefakt verantwortlich.

Artefakte werden nach heutigem Stand von menschlichen Experten bewertet und beurteilt. Beispielsweise können ein Servicetechniker, ein Applikationsspezialist oder ein Experte zur Beurteilung des Artefakts hinzugezogen werden. Der Erfinder hat erkannt, dass eine automatisierte Bewertung oder Vorfilterung der Fälle sowie ein Mechanismus, der die betroffenen Bilder vorab automatisch untersucht und soweit möglich bereits klassifiziert, wünschenswert ist.

Aus der Druckschrift DE 103 54 214 A1 ist ein Verfahren zur Erzeugung von tomographischen Schnittbildern, insbesondere von Röntgen-CT-Bildern, eines sich periodisch bewegenden Objektes mit periodisch sich abwechselnden Bewegungs- und Ruhephasen, vorzugsweise eines Herzen, und ein bildgebendes Tomographiegerät zu diesem Zweck bekannt, wobei zur Abtastung mehrere Fokus-Detektor-Kombinationen mit flächigen Detektoren auf koaxialen Spiralbahnen bewegt werden und gleichzeitig Bewegungssignale des sich bewegenden Objektes zur Detektion von Bewegungs- und Ruhephase gemessen und die zeitliche Korrelation zwischen den Bewegungsdaten und den Detektorausgangsdaten gespeichert werden und mit den Detektorausgangsdaten jedes Detektors, die eine Ruhephase des sich bewegenden Objektes repräsentieren, unabhängig voneinander axiale Segmentbildstapel aus Untersegmenten der Spiralbahnen rekonstruiert und zeitrichtige Semgentbildstapel aus den n Spiralbahnen der n Fokus-Detektor-Kombinationen winkelkomplementär und schichtweise zu 180°-Tomographie-Schnittbildern aufsummiert werden, wobei die axialen Segmentbildstapel in einem ersten Schritt aus doppeltgeneigten Rekonstruktionsebenen rekonstruiert und in einem zweiten Schritt zu axialen Segmentbildstapeln reformatiert werden und hierfür Detektordaten aus mehreren aufeinander folgenden Bewegungsperioden verwendet werden.

Aus der Druckschrift DE 10 2015 218 928 A1 ist ein Verfahren zur Erzeugung von Röntgenbilddaten eines Untersuchungsobjektes mit reduziertem Calcium-Blooming. Die Röntgenbilddaten basieren auf Röntgenprojektionsdaten, die mit einem energieselektiven Röntgendetektor und bezüglich wenigstens zweier Energiefenster erfasst wurden. Das Verfahren umfasst den Schritt des Bestimmens eines Calcium-Anteils in den Röntgenprojektionsdaten mittels einer Basismaterialzerlegung, wobei der Calcium-Anteil den Calcium-bedingten Teil der durch das Untersuchungsobjekt verursachten Röntgenschwächung beschreibt. Das Verfahren umfasst ferner den Schritt des Erzeugens eines Misch-Röntgenprojektionsdatensatzes mit mittels eines Gewichtungsfaktors kleiner eins unterdrücktem Calcium-Anteil, und Rekonstruieren der Röntgenbilddaten aus dem Misch-Projektionsdatensatz durch Anwenden eines Rekonstruktionsalgorithmus oder die Schritte des Rekonstruierens von Einzel-Röntgenbilddatensätzen für jedes der Energiefenster anhand eines Rekonstruktionsalgorithmus aus den Röntgenprojektionsdatensätzen, und des Erzeugens eines Misch-Röntgenbilddatensatzes durch gewichtete Addition des ersten und des wenigstens einen zweiten Einzel-Röntgenbilddatensatzes, wobei Gewichtungsfaktoren für die Einzelbilddatensätze derart gewählt werden, dass ein Calcium-Anteil in dem Misch-Röntgenbilddatensatz unterdrückt wird.

Aus der Druckschrift DE 10 2015 206 362 B3 ist ein dynamisches CT-Bildgebungsverfahren bekannt, bei dem Verfahren Projektionsmessdaten von einem abzubildenden Bereich eines Untersuchungsobjekts bei gleichzeitiger korrelierter Erfassung der Atembewegung des Untersuchungsobjekts erfasst werden. Es wird eine Phase der Atembewegung ausgewählt, zu der Bilddaten rekonstruiert werden sollen. Es werden weiterhin die der ausgewählten Phase zugeordneten Phasen-Projektionsmessdaten ermittelt. Anschließend werden probeweise Übergangsbereiche von Teilbildern des abzubildenden Bereichs zwischen aufeinanderfolgenden Atemzyklen auf Basis eines Teils der Phasen-Projektionsmessdaten rekonstruiert und schließlich eine Standard-Rekonstruktion unter Verwendung von einer optimalen Rekonstruktion zugeordneten Teilen der Phasen-Projektionsmessdaten für jeden der aufeinanderfolgenden Atemzyklen durchgeführt.

Es ist Aufgabe der Erfindung, ein Verfahren zur Artefakterkennung, ein Verfahren zum Trainieren einer Erkennungseinheit sowie eine Recheneinheit, ein Computertomographiesystem, ein Computerprogrammprodukt, ein computerlesbares Medium, eine Trainingseinheit, ein weiteres Computerprogrammprodukt und ein weiteres computerlesbares Medium anzugeben, welche eine automatische Artefakterkennung ermöglichen.

Die Aufgabe wird erfindungsgemäß gelöst durch ein Verfahren zur Artefakterkennung nach Anspruch 1, ein Verfahren zum Trainieren einer Erkennungseinheit nach Anspruch 7 sowie eine Recheneinheit nach Anspruch 11, ein Computertomographiesystem nach Anspruch 12, ein Computerprogrammprodukt nach Anspruch 13, ein computerlesbares Medium nach Anspruch 14, eine Trainingseinheit nach Anspruch 15, ein weiteres Computerprogrammprodukt nach Anspruch 16 und ein weiteres computerlesbares Medium nach Anspruch 17.

Die Erfindung betrifft ein Verfahren zur Artefakterkennung in computertomographischen Bilddaten aufweisend die Schritte des Aufnehmens, des Rekonstruierens, des Prüfens, des Erkennens und des Ausgebens. Im Schritt des Aufnehmens werden Projektionsmessdaten eines Untersuchungsbereichs eines zu untersuchenden Objekts aufgenommen. Im Schritt des Rekonstruierens werden Bilddaten basierend auf den Projektionsmessdaten rekonstruiert. Im Schritt des Prüfens werden die Bilddaten auf Vorhandensein eines Artefakts mittels einer trainierten Erkennungseinheit geprüft. Im Schritt des Erkennens wird eine Artefaktart eines vorhandenen Artefakts mittels einer trainierten Erkennungseinheit erkannt. Im Schritt des Ausgebens wird die erkannte Artefaktart ausgegeben.

Im Schritt des Rekonstruierens werden Bilddaten beispielsweise mittels einer gefilterten Rückprojektion oder einer iterativen Rekonstruktion aus den Projektionsmessdaten rekonstruiert. Die Bilddaten können ein Schichtbild, eine Mehrzahl von insbesondere benachbarten Schichtbildern oder eine Mehrzahl zeitlich abhängiger Schichtbilder umfassen.

Im Schritt des Prüfens wird geprüft, ob ein Artefakt in den Bilddaten vorhanden ist. Falls ein Artefakt vorhanden ist, kann der Schritt des Prüfens ferner eine Lokalisation des Artefakts in den Bilddaten umfassen. Beispielsweise kann die Lage des Artefakts durch die Identifizierung der Schicht bzw. des Schichtbildes in den Bilddaten oder/und die Lage des Artefakts innerhalb einer Schicht bzw. des Schichtbildes in den Bilddaten lokalisiert werden. Ferner kann eine Erstreckung des Artefakts lokalisiert werden. Im Schritt des Erkennens wird die Artefaktart erkannt, wobei beispielsweise die Artefaktart von einer Lokalisation abhängen kann. Die Artefaktart kann insbesondere aus einer Mehrzahl bekannter Artefaktarten bestimmt werden.

Der Erfinder hat erkannt, dass mittels artefaktbehafteter und komplementärer artefaktfreier Trainingsdaten mittels moderner Methoden des maschinellen überwachten Lernens eine Artefakterkennung ermöglicht wird, um beispielsweise im späteren Einsatz in klinischen Bildern automatisch technische Defekte zu erkennen und zu bewerten. Diese Bewertung bzw. Erkennung kann von automatischen Erklärungen an den Radiologen in Bezug auf einzelne nicht erkannten Strukturen jenseits der Anatomie umfassen, beispielsweise Bewegung des Untersuchungsobjekts, Beam-Hardening, Calcium Blooming und anderen. Diese Bewertung bzw. Erkennung kann vorteilhaft für eine tägliche Analyse der klinischen Daten zur Erkennung von Defekten oder erster Anzeichen technischer Probleme verwendet werden. Eine regelmäßige Überprüfung mittels der Artefakterkennung kann im Falle eines identifizierten Fehlers eine automatische Nachricht an z.B. den Service Techniker erzeugen, der den Defekt vor der Beschwerde durch den Kunden beheben kann. Vorteilhaft kann die Artefaktart bzw. Ursache des Artefakts ausgegeben werden. Beispielsweise können sporadische Detektorkanal-Aussetzer nur in vereinzelten Bildern Artefakte erzeugen, die beispielsweise im Bereich der Bilddaten außerhalb des Untersuchungsobjekts, beispielsweise im Bereich der Luft um das Untersuchungsobjekt, vorhanden sind. Damit ist ein nicht unmittelbar für den Radiologen relevanter Defekt oder Artefakt umfasst, wobei es trotzdem wünschenswert ist den Fehler zu beheben. Neben dem Einsatz im klinischen Umfeld ist auch ein Einsatz in der Fertigung von Computertomographiesytemen vorteilhaft. Durch die automatische Analyse der Bilddaten kann in vereinfachter Form auf die dem Fehler zugrunde liegende Ursache, beispielsweise Nummer oder Lage des defekten Detektormoduls, geschlossen werden und so die Abläufe im Fertigungsprozess oder/und im klinischen Betrieb vorteilhaft beschleunigt werden können.

Der Schritt des Prüfens kann insbesondere vor dem Schritt des Erkennens durchgeführt werden. Im Schritt des Prüfens können die Bilddaten bzw. das Schichtbild zerlegt bzw. charakterisiert werden, um zu prüfen, ob ein Artefakt vorliegt oder nicht. Dabei können eine Vielzahl an Methoden verwendet werden, beispielsweise FFT, Wavelet oder andere. Beispielsweise können die Bilddaten in Regionen, beispielsweise ROIs, zerlegt bzw. unterteilt werden. Es kann mindestens eine Kenngröße für mindestens eine Region, insbesondere eine Mehrzahl von Regionen und bevorzugt für jede Region, bestimmt werden.

Beispielsweise kann, insbesondere jedes, Schichtbild in beispielsweise 150 kreisförmige Regionen, sogenannte ROIs (Region of Interests), zerlegt werden, wobei die Anordnung und Radien dem Verlauf einer Iris im Auge nachempfunden sind, vergleiche dazu die Veröffentlichung von Games, Herman M., and Robert B. Fisher, "Primal sketch feature extraction from a log-polar image." Pattern Recognition Letters 24.7 (2003): 983-992). Für das Schichtbild können dann in den beispielsweisen 150 Regionen der mittlere HU-Wert, der minimale HU-Wert, der maximale HU-Wert oder eine andere Kenngröße als erste Kenngröße bestimmt werden.

Ferner kann ein jeweils ein Gradientenbild beispielsweise in X- und Y-Richtung aus dem Schichtbild abgeleitet werden. Das Gradientenbild umfasst den Gradienten der HU-Werte für beispielsweise jede Region beispielsweise entlang einer X- bzw. Y-Richtung im Schichtbild. In jedem Gradientenbild können beispielsweise 150 ROI-Werte des Betrags des Mittelwerts des Gradienten innerhalb einer Region als zweite Kenngröße für das Gradientenbild in X-Richtung bzw. als dritte Kenngröße für das Gradientenbild in Y-Richtung bestimmt werden. Auf diese Weise kann jedes Bild mit beispielsweise der Gesamtheit oder einer Teilmenge der ersten, zweiten und dritten Kenngrößen charakterisiert werden, sodass für ein Schichtbild beispielsweise die Gesamtheit der 450 ROI-Werte verwendet werden kann. Der Schritt des Prüfens kann eine schwellwertbasierte Entscheidung auf das Vorhandensein des Artefakts umfassen. Übersteigt beispielsweise eine Teilmenge der Kenngrößen einen Schwellwert, so kann das Vorhandensein oder NichtVorhandensein des Artefakts bestimmt werden.

Im Schritt des Erkennens kann beispielsweise basierend auf der mindestens einen Kenngröße eine Artefaktart erkannt werden. Die Artefaktart kann basierend auf einer räumlichen Anordnung von Kenngrößen, beispielsweise oberhalb eines Schwellwerts, erkannt werden. Das Erkennen der Artefaktart kann insbesondere auf Basis des Wissens bzw. der Erfahrung der Erkennungseinheit basieren. Es können insbesondere mehrere Artefaktarten erkannt werden.

Die Erkennung von Artefakten in klinischen Bilddaten, insbesondere verursacht durch Defekte und physikalische Effekte, kann mit Hilfe von Methoden aus dem Bereich des maschinellen Lernens vorteilhaft automatisiert werden. Dabei kann ausgenutzt werden, dass bereits bekannte Ursachen, beispielsweise Detektorfehler, Röntgenquellenfehler bzw. Röhrenfehler oder andere, bei der Erzeugung von Trainingsdaten auf beispielsweise vorhandene Rohdaten aufgeprägt und daraus wiederum Bilder berechnet bzw. rekonstruiert werden können. Die Trainingsdaten können als Grundlage für ein Verfahren des überwachten Lernens dienen, welches im Ergebnis als zusätzliche Software den Radiologen am Gerät bei der Bewertung der Bilder vorteilhaft unterstützen kann. Durch diese automatisierte Unterstützung können einfache Meldungen von Problemen vermieden werden. Darüber hinaus kann eine durchgeführte automatische Artefakterkennung bzw. Analyse dazu dienen, Defekte am Gerät noch vor dem Radiologen bzw. bevor klinische Daten betroffen sind zu erkennen. Falls nötig kann automatisch ein Service-Auftrag als Ausgabe erzeugt werden, als sogenannte vorausschauende Instandhaltung (engl.: predictive maintenance).

Gemäß einem Aspekt der Erfindung basiert die trainierte Erkennungseinheit auf einem maschinellen Lernverfahren, einer statistischen Methode, einer Abbildungsvorschrift, mathematischen Funktionen oder einem künstlichen neuronalen Netz. Die trainierte Erkennungseinheit kann bevorzugt auf dem Verfahren der Random-(Decision-)Forests basieren. Vorteilhaft können Muster oder Gesetzmäßigkeiten aus den Trainingsdaten auf den Bilddatensatz angewendet werden. Die Erkennungseinheit kann Verknüpfungen oder Gewichtungen von Merkmalen oder Kenngrößen der Bilddaten zum Prüfen bzw. Erkennen verwenden.

Unter maschinellen Lernverfahren kann man die künstliche Generierung von Wissen aus Erfahrung bezeichnen. Ein künstliches System lernt aus Beispielen in einer Trainingsphase und kann nach Beendigung der Trainingsphase verallgemeinern. Damit kann die Erkennungseinheit angepasst werden. Die Verwendung maschineller Lernverfahren kann ein Erkennen von Mustern und Gesetzmäßigkeiten in den Trainingsdaten umfassen. Nach der Trainingsphase kann die Erkennungseinheit beispielsweise in bisher unbekannten Bilddaten Merkmale oder Kenngrößen extrahieren. Nach der Trainingsphase kann die Erkennungseinheit beispielsweise basierend auf bisher unbekannten Bilddaten eine Artefaktart erkennen. Vorteilhaft kann aus dem Wissen von bekannten Trainingsdaten ein zuverlässiges Verfahren zur Artefakterkennung abgeleitet werden. Vorteilhaft kann auf der Basis der Erfahrungen der Erkennungseinheit von Mustern oder Gesetzmäßigkeiten eine Erkennung eines Artefakts bzw. einer Artefaktart durchgeführt werden.

Gemäß einem Aspekt der Erfindung ist die Erkennungseinheit mit Artefakten aus der Gruppe aus streifenförmig, ringförmig, linienförmig, bandförmig, schattenförmig, strahlenförmig, verrauscht, spiralförmig und stufenförmig trainiert. Vorteilhaft kann die Erkennungseinheit eine Mehrzahl von Artefaktarten unterscheiden.

Gemäß einem Aspekt der Erfindung ist die Artefaktart eine aus Physikartefakt, Defektartefakt und Bewegungsartefakt. Der Physikartefakt kann ein Aufhärtungsartefakt, ein Streuartefakt, ein Projektions-Abtastartefakt, ein Metallartefakt und ein (Calcium-)Blooming-Artefakt, ein Teil- oder ein Partialvolumenartefakt umfassen. Der Defektartefakt kann ein Artefakt bedingt durch einen Defekt des Bildaufnahmesystems, insbesondere des Röntgendetektors oder der Röntgenquelle, umfassen. Der Bewegungsartefakt kann ein Patientenartefakt, ein Körperbewegungsartefakt des Untersuchungsobjekts, ein Herzbewegungsartefakt oder ein Atemartefakt umfassen. Vorteilhaft kann eine Mehrzahl von Artefakten unterschieden werden. Die Artefaktart kann einen direkten Rückschluss auf die Ursache des Artefakts zulassen. Der Physikartefakt kann auf eine physikalische Ursache zurückgeführt werden. Der Defektartefakt kann auf eine technische Ursache zurückgeführt werden. Der Bewegungsartefakt kann auf eine patientenbedingte Ursache zurückgeführt werden.

Gemäß einem Aspekt der Erfindung umfasst das Ausgeben ferner eine technische Ursache, physikalische Ursache oder patientenbedingte Ursache der Artefaktart. Vorteilhaft kann der Benutzer die Ursache des Artefakts zuverlässig erkennen und gegebenenfalls die Ursache selbst beheben, wobei anschließend eine artefaktfreie oder artefaktreduzierte Aufnahme durchgeführt werden kann.

Gemäß einem Aspekt der Erfindung ist die technische Ursache eine aus Nichtlinearität oder Defekt des Detektors, Instabilität des Röntgenquellenfokus und fehlerhafte Kalibration. Eine Nichtlinearität kann beispielsweise durch eine veränderte Temperatur des Röntgendetektors oder einen veränderten Polarisationszustand des Röntgendetektors bedingt sein. Die Instabilität des Röntgenquellenfokus kann beispielsweise durch Alterungseffekte der Röntgenquelle bedingt sein. Vorteilhaft kann die Ursache des Artefakts auf eine technische Komponente zuverlässig zurückgeführt werden. Vorteilhaft kann eine schnelle Behebung der technischen Ursache ermöglicht werden. Vorteilhaft kann die defekte technische Komponente identifiziert bzw. lokalisiert werden.

Die Erfindung betrifft ferner ein Verfahren zum Trainieren einer Erkennungseinheit zur Artefakterkennung in computertomographischen Bilddaten aufweisend die Schritte des Erzeugens und des Trainierens. Im Schritt des Erzeugens werden Artefaktbilddaten mit mindestens einem Artefakt erzeugt. Im Schritt des Trainierens wird die Erkennungseinheit basierend auf den Artefaktbilddaten trainiert.

Im Schritt des Erzeugens kann basierend auf einer Auswahl aus einer Mehrzahl an möglichen Ursachen von Artefakten ein Artefakt durch Simulation auf existierende klinische Daten aufgeprägt werden, so dass Artefaktbilddaten gebildet werden. Im Schritt des Erzeugens können artefaktbehaftete Bilddaten mittels eines Computertomographiesystems aufgenommen werden. Im Schritt des Erzeugens können mittels Simulation artefaktbehaftete Bilddaten erzeugt werden. Es kann auch eine Mehrzahl an Artefakten auf die klinischen Daten aufgeprägt werden. Die Artefaktbilddaten können basierend auf artefaktfreien Bilddaten durch Manipulation der den Bilddaten zugrundeliegenden Rohdaten und einer erneuten Rekonstruktion der manipulierten Rohdaten erzeugt werden. Die Artefaktbilddaten umfassen den Effekt von beispielsweise Nichtlinearitäten im Detektor, Instabilitäten des Fokus oder fehlerhafter Kalibration bzw. fehlerhaften Kalibrationstabellen bezüglich des Röntgendetektors oder/und der Röntgenquelle. Auf diese Weise kann die Erzeugung einer großen Menge an Trainingsdaten erzeugen, wobei Bilddaten in fehlerfreier bzw. artefaktfreier Form und Bilddaten mit unterschiedlichen Artefakten von den Trainingsdaten umfasst sind. Die Trainingsdaten eignen sich auf diese Weise für moderne Methoden des maschinellen überwachten Lernens, um im späteren Einsatz in klinischen Bildern automatisch technische Defekte zu erkennen und zu bewerten.

Beispielsweise kann ein Artefakt basierend auf einem Defekt eines Detektormoduls auf Basis einer Nicht-Linearität des Signalverhaltens in den Rohdaten der Trainingsdaten simuliert werden. Die Trainingsdaten können ferner die unverfälschten, artefaktfreien Bilddaten umfassen.

Beispielsweise kann, insbesondere jedes, Schichtbild in beispielsweise 150 kreisförmige Regionen, sogenannte ROIs (Region of Interests), zerlegt werden, wobei die Anordnung und Radien dem Verlauf einer Iris im Auge nachempfunden sind. Für das Schichtbild können dann in den beispielsweisen 150 Regionen der mittlere HU-Wert, der minimale HU-Wert, der maximale HU-Wert oder eine andere Kenngröße als erste Kenngröße bestimmt werden.

Ferner kann jeweils ein Gradientenbild beispielsweise in X- und Y-Richtung aus dem Schichtbild abgeleitet werden. In jedem Gradientenbild können beispielsweise 150 ROI-Werte des Betrags des Mittelwerts des Gradientenwerts innerhalb einer Region als zweite Kenngröße für das Gradientenbild in X-Richtung bzw. als dritte Kenngröße für das Gradientenbild in Y-Richtung bestimmt werden. Auf diese Weise kann jedes Bild mit beispielsweise der Gesamtheit oder einer Teilmenge der ersten, zweiten und dritten Kenngrößen charakterisiert werden, sodass für ein Schichtbild beispielsweise die Gesamtheit der 450 ROI-Werte verwendet werden kann.

Eine Vielzahl von klinischen Bildern, beispielsweise 2000, können jeweils mit und ohne Artefakt auf die oben beschrieben Weise charakterisiert werden und basierend darauf kann die Erkennungseinheit mittels eines maschinell lernenden Verfahrens trainiert werden. Ohne Einschränkung der Allgemeinheit kann aufgrund der vorteilhaften Robustheit ein Random-(Decision-)Forest als Verfahren gewählt werden, welches als gewichte Summe der Ausgänge einer Vielzahl von kleineren Entscheidungsbäumen zu verstehen ist. Typische Werte für die Anzahl der Entscheidungsbäume in einem Random-(Decision-)Forest liegen in der Größenordnung von 500 bis 1000.

Die Auswertung der Zuverlässigkeit bzw. Stabilität der trainierten Erkennungseinheit kann mit Hilfe einer ROC-Analyse auf klassifizierten Bildern, welche nicht Teil des Trainings waren, basieren. Eine Analyse der Erstellung des Random-(Decision-)Forests erlaubt auch die Klassifikation der Eingabegrößen, beispielsweise eine Kenngröße, nach der jeweiligen Wichtigkeit für das Endergebnis.

Im Schritt des Trainierens bzw. Anpassens kann die Erkennungseinheit basierend auf den Trainingsdaten angepasst werden. Der Schritt des Trainierens kann insbesondere ein maschinelles Lernverfahren umfassen, wobei auch eine statistische Methode, eine Abbildungsvorschrift oder ein künstlichen neuronalen Netz umfasst sein kann. Die statistische Methode kann beispielsweise Fuzzylogik, eine selbstorganisierende Karte, Stichprobenwiederholung (engl.: Resampling), Mustererkennung oder Support Vector Machine umfassen. Das maschinelle Lernverfahren kann Aspekte von Data-Mining umfassen. Das maschinelle Lernverfahren kann ein symbolisches System oder ein subsymbolisches System, beispielsweise ein künstliches neuronales Netz mit oder ohne Regression, umfassen. Das maschinelle Lernen kann ein überwachtes, teilüberwachtes, unüberwachtes, bestärkendes oder aktives Lernen umfassen. Das maschinelle Lernverfahren kann Batch-Lernen, bei dem alle Trainingsdaten gleichzeitig vorhanden sind und beispielsweise nach Bearbeiten aller Trainingsdaten Muster und Gesetzmäßigkeiten von der Erkennungseinheit erlernt werden, umfassen. Das maschinelle Lernen kann ein kontinuierliches, inkrementelles oder sequentielles Lernverfahren umfassen, wobei die Muster und Gesetzmäßigkeiten zeitlich versetzt entwickelt werden. Beim kontinuierlichen, inkrementellen oder sequentiellen Lernverfahren können die Trainingsdaten nach einmaligem Ausführen und beispielsweise Gewichte anpassen verloren gehen. Beim Batch-Lernen oder beim kontinuierlichen, inkrementellen oder sequentiellen Lernverfahren können die Trainingsdaten gespeichert vorliegen und die Trainingsdaten können wiederholbar zugreifbar sein. Das maschinelle Lernverfahren kann beispielsweise Deep-Learning-Methoden oder Shallow-Learning-Methoden umfassen. Vorteilhaft können die Kenntnisse aus bekannten Trainingsdaten auf unbekannte Bilddaten angewendet werden. Vorteilhaft kann die Erkennungseinheit durch das Trainieren eine zuverlässige Erkennung des Artefakts, der Artefaktart oder der Ursache des Artefakts ermöglichen. Bilddaten aus dem Verfahren zur Artefakterkennung können zusätzlich zum Trainieren der Erkennungseinheit verwendet werden, beispielsweise um statistische Wahrscheinlichkeiten des Auftretens von Merkmalen oder Kenngrößen durch eine zunehmend größere Datenbasis zu verbessern.

Zusätzlich können die erzeugten Bilddaten mit und ohne Artefakt als Beispiele in einer Datenbank hinterlegt werden und dem Benutzer zur Lernzwecken zur Verfügung gestellt werden. Vorteilhaft können neben den klinischen und diagnostischen Aspekten des Bildes auch die technischen Einflüsse von einem Training des Radiologen umfasst sein.

Gemäß einem Aspekt der Erfindung basieren die Artefaktbilddaten auf simulierten Artefaktprojektionsdaten oder artefaktbehafteten Projektionsmessdaten. Simulierte Artefaktprojektionsdaten können ausschließlich die Bildinformation des Artefakts umfassen. Es können simulierte oder mit einem Computertomographiesystem aufgenommene Projektionsmessdaten bzw. Rohdaten verwendet werden. Es kann durch Simulation ein Artefakt auf artefaktfreie mit einem Computertomographiesystem aufgenommene Projektionsmessdaten oder artefaktfreie simulierte Projektionsmessdaten aufgeprägt werden. Es kann aus artefaktbehafteten Projektionsmessdaten ein artefaktfreie bzw. um das Artefakt korrigierte Projektionsmessdaten erzeugt werden. Es können aus artefaktbehafteten Projektionsmessdaten Artefaktprojektionsdaten erzeugt bzw. simuliert werden. Vorteilhaft können für die Aufnahme eines Untersuchungsobjekts artefaktbehaftete Bilddaten und artefaktfreie Bilddaten als Trainingsdaten zur Verfügung gestellt werden.

Gemäß einem Aspekt der Erfindung umfasst das erfindungsgemäße Verfahren ferner die Schritte des Aufnehmens, des Rekonstruierens, des Auswählens, des Erzeugens, des Rekonstruierens und des Trainierens. Im Schritt des Aufnehmens werden im Wesentlichen artefaktfreien Projektionsmessdaten aufgenommen, insbesondere mittels eines Computertomographiesystems. Im Schritt des Rekonstruierens werden im Wesentlichen artefaktfreien Bilddaten basierend auf den im Wesentlichen artefaktfreien Projektionsmessdaten rekonstruiert. Im Schritt des Auswählens wird mindestens eine Artefaktart ausgewählt. Im Schritt des Erzeugens werden, insbesondere simulierte, Artefaktprojektionsdaten für die mindestens eine Artefaktart erzeugt. Im Schritt des Rekonstruierens werden Artefaktbilddaten basierend auf den Projektionsmessdaten und den Artefaktprojektionsdaten rekonstruiert. Im Schritt des Trainierens wird die Erkennungseinheit zusätzlich basierend auf den im Wesentlichen artefaktfreien Bilddaten trainiert. Vorteilhaft kann der Einfluss des Untersuchungsobjekts auf das Training reduziert werden.

Gemäß einem Aspekt der Erfindung umfasst das Trainieren ein Charakterisieren der Artefaktbilddaten oder/und der im Wesentlichen artefaktfreien Bilddaten. Das Charakterisieren kann auch als Parametrieren bezeichnet werden. Im Schritt des Charakterisierens können Features bzw. Merkmale oder Kenngrößen aus den Artefaktbilddaten oder den im Wesentlichen artefaktfreien Bilddaten extrahiert werden. Basierend auf den extrahierten Features können Artefaktbilddaten bzw. Bilddaten beispielsweise aufweisend die gleiche Artefaktart gruppiert werden. Das Charakterisieren kann das Bestimmen mindestens einer Kenngröße umfassen. Beispielsweise kann die Kenngröße innerhalb einer Region bestimmt werden. Das Trainieren der Erkennungseinheit kann auf der Kenngröße basieren. Vorteilhaft können die Trainingsdaten auf eine Matrix von Kenngrößen reduziert werden. Vorteilhaft kann die Matrix von Kenngrößen als Eingangsparametermatrix, beispielsweise in ein maschinelles Lernverfahren, insbesondere in einen Random-(Decision-)Forrest, verwendet werden. Vorteilhaft kann die Erkennungseinheit basierend auf vorbestimmten Merkmalen oder Kenngrößen trainiert werden. Vorteilhaft kann der Schritt des Charakterisierens das Trainingsverfahren beschleunigen.

Die Erfindung betrifft ferner eine Recheneinheit zur Artefakterkennung in computertomographischen Bilddaten aufweisend Mittel zum Durchführen des erfindungsgemäßen Verfahrens zur Artefakterkennung. Die Recheneinheit weist eine Aufnahmeeinheit zum Aufnehmen von Projektionsmessdaten eines Untersuchungsbereichs eines zu untersuchenden Objekts, eine Rekonstruktionseinheit zum Rekonstruieren von Bilddaten basierend auf den Projektionsmessdaten, eine Prüfeinheit zum Prüfen auf Vorhandensein eines Artefakts in den Bilddaten mittels einer trainierten Erkennungseinheit, eine Erkennungseinrichtung zum Erkennen einer Artefaktart eines vorhandenen Artefakts mittels einer trainierten Erkennungseinheit, und eine Ausgabeeinheit zum Ausgeben der erkannten Artefaktart auf. Die Erfindung betrifft ferner ein Computertomographiesystem mit einer Recheneinheit. Vorteilhaft kann das Verfahren der Artefakterkennung direkt im Computertomographiesystem durchgeführt werden. Vorteilhaft können Ursachen für das Artefakt schnell erkannt werden. Vorteilhaft können artefaktbehaftete Aufnahmen vermieden werden. Die Erfindung betrifft ferner ein Computerprogramm mit Programmcode, um das erfindungsgemäße Verfahren zur Artefakterkennung durchzuführen, wenn das Computerprogramm auf einem Computer ausgeführt wird. Die Erfindung betrifft ferner einen computerlesbaren Datenträger mit Programmcode eines Computerprogramms, um das Verfahren zur Artefakterkennung durchzuführen, wenn das Computerprogramm auf einem Computer ausgeführt wird.

Die Erfindung betrifft ferner eine Trainingseinheit zum Trainieren einer Erkennungseinheit aufweisend Mittel zum Durchführen eines Verfahrens zum Trainieren der Erkennungseinheit. Die Trainingseinheit kann vom Computertomographiesystem umfasst sein. Die Trainingseinheit kann eine vom Computertomographiesystem separate Einheit sein. Die Trainingseinheit kann eine Erzeugungseinheit zum Erzeugen von Artefaktbilddaten mit mindestens einem Artefakt, und eine Trainingseinrichtung zum Trainieren der Erkennungseinheit basierend auf den Artefaktbilddaten aufweisen. Vorteilhaft kann die Trainingseinheit Trainingsdaten mittels einer Schnittstelle empfangen, beispielsweise von einem Speichermedium oder von einer Cloud-Speicher. Die Erfindung betrifft ferner ein weiteres Computerprogramm mit weiterem Programmcode, um das Verfahren zum Trainieren der Erkennungseinheit durchzuführen, wenn das weitere Computerprogramm auf einem Computer ausgeführt wird. Die Erfindung betrifft ferner einen weiteren computerlesbaren Datenträger mit weiterem Programmcode eines weiteren Computerprogramms, um das Verfahren zum Trainieren der Erkennungseinheit durchzuführen, wenn das weitere Computerprogramm auf einem Computer ausgeführt wird.

Nachfolgend werden Ausführungsbeispiele der Erfindung anhand von Zeichnungen näher erläutert. Hierbei zeigt:
FIG 1 schematisch eine Darstellung des erfindungsgemäßen Verfahrens zur Artefakterkennung;
FIG 2 schematisch eine Darstellung des erfindungsgemäßen Verfahrens zum Trainieren der Erkennungseinheit;
FIG 3 schematisch eine Darstellung der Regionen in den Bilddaten; und
FIG 4 schematisch ein Konzept eines erfindungsgemäßen Computertomographen.

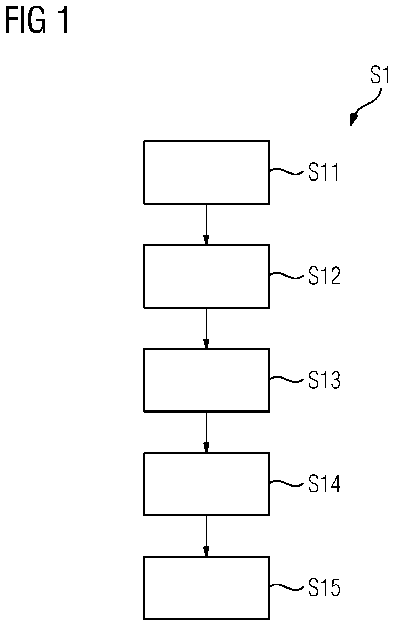

Die Fig. 1 zeigt eine beispielhafte Ausführungsform des erfindungsgemäßen Verfahrens S1 zur Artefaktkorrektur. Das erfindungsgemäße Verfahren S1 zur Artefakterkennung in computertomographischen Bilddaten weist die Schritte des Aufnehmens S11, des Rekonstruierens S12, des Prüfens S13, des Erkennens S14 und des Ausgebens S15 auf. Im Schritt des Aufnehmens S11 werden Projektionsmessdaten eines Untersuchungsbereichs eines zu untersuchenden Objekts aufgenommen. Im Schritt des Rekonstruierens S12 werden Bilddaten basierend auf den Projektionsmessdaten rekonstruiert. Im Schritt des Prüfens S13 werden die Bilddaten auf Vorhandensein eines Artefakts mittels einer trainierten Erkennungseinheit geprüft. Im Schritt des Erkennens S14 wird eine Artefaktart eines vorhandenen Artefakts mittels einer trainierten Erkennungseinheit erkannt. Im Schritt des Ausgebens S15 wird die erkannte Artefaktart ausgegeben.

Im Schritt des Rekonstruierens S12 werden Bilddaten beispielsweise mittels einer gefilterten Rückprojektion oder einer iterativen Rekonstruktion aus den Projektionsmessdaten rekonstruiert. Die Bilddaten umfassen ein Schichtbild, eine Mehrzahl von insbesondere benachbarten Schichtbildern oder eine Mehrzahl zeitlich abhängiger Schichtbilder.

Im Schritt des Prüfens S13 wird geprüft, ob ein Artefakt in den Bilddaten vorhanden ist. Falls ein Artefakt vorhanden ist, kann der Schritt des Prüfens S13 ferner eine Lokalisation des Artefakts in den Bilddaten umfassen. Beispielsweise wird die Lage des Artefakts durch die Identifizierung der Schicht bzw. des Schichtbildes in den Bilddaten oder/und die Lage des Artefakts innerhalb einer Schicht bzw. des Schichtbildes in den Bilddaten lokalisiert. Ferner kann eine Erstreckung des Artefakts lokalisiert werden. Der Schritt des Prüfens S13 wird insbesondere vor dem Schritt des Erkennens durchgeführt. Im Schritt des Prüfens S13 können die Bilddaten bzw. das Schichtbild zerlegt bzw. charakterisiert werden, um zu prüfen, ob ein Artefakt vorliegt oder nicht. Dabei können eine Vielzahl an Methoden verwendet werden, beispielsweise FFT, Wavelet oder andere. Beispielsweise können die Bilddaten in Regionen, beispielsweise ROIs, zerlegt bzw. unterteilt werden.

Im Schritt des Erkennens S14 wird die Artefaktart erkannt, wobei beispielsweise die Artefaktart von einer Lokalisation abhängen kann. Die Artefaktart wird insbesondere aus einer Mehrzahl bekannter Artefaktarten bestimmt.

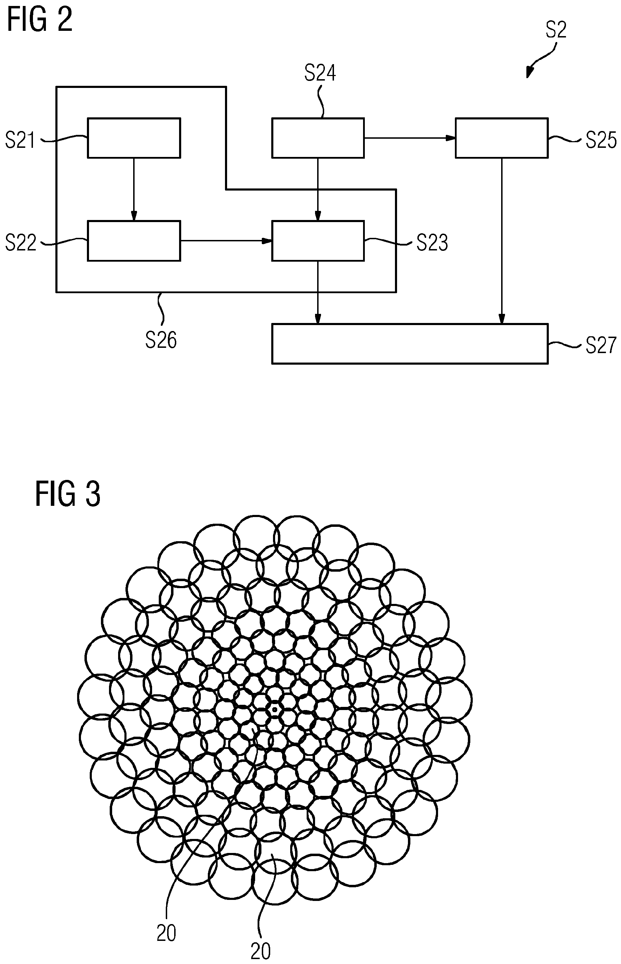

Beispielsweise wird, insbesondere jedes, Schichtbild der Bilddaten in beispielsweise 150 kreisförmige Regionen, sogenannte ROIs (Region of Interests), zerlegt, wobei die Anordnung und Radien dem Verlauf einer Iris im Auge nachempfunden sind, vergleiche dazu Figur 3. Für das Schichtbild können dann in den beispielsweisen 150 Regionen der mittlere HU-Wert, der minimale HU-Wert, der maximale HU-Wert oder eine andere Kenngröße als erste Kenngröße bestimmt werden.

Ferner kann ein jeweils ein Gradientenbild in X- und Y-Richtung aus dem Schichtbild abgeleitet werden. In jedem Gradientenbild werden beispielsweise 150 ROI-Werte des Betrags des Mittelwerts des Gradientenwerts innerhalb einer Region als zweite Kenngröße für das Gradientenbild in X-Richtung bzw. als dritte Kenngröße für das Gradientenbild in Y-Richtung bestimmt. Auf diese Weise wird jedes Bild mit beispielsweise der Gesamtheit oder einer Teilmenge der ersten, zweiten und dritten Kenngrößen charakterisiert, sodass für ein Schichtbild beispielsweise die Gesamtheit der 450 ROI-Werte verwendet werden kann.

Im Schritt des Erkennens S14 kann beispielsweise basierend auf der mindestens einen Kenngröße eine Artefaktart erkannt werden. Die Artefaktart kann basierend auf einer räumlichen Anordnung von Kenngrößen, beispielsweise oberhalb eines Schwellwerts, erkannt werden. Das Erkennen der Artefaktart kann insbesondere auf Basis des Wissens bzw. der Erfahrung der Erkennungseinheit basieren.

Die trainierte Erkennungseinheit basiert auf einem maschinellen Lernverfahren, einer statistischen Methode, einer Abbildungsvorschrift, mathematischen Funktionen oder einem künstlichen neuronalen Netz. Die trainierte Erkennungseinheit basiert bevorzugt auf dem Verfahren der Random-(Decision-)Forests.

Unter maschinellen Lernverfahren bezeichnet man die künstliche Generierung von Wissen aus Erfahrung. Ein künstliches System lernt aus Beispielen in einer Trainingsphase und kann nach Beendigung der Trainingsphase verallgemeinern. Damit wird die Erkennungseinheit im Training angepasst. Die Verwendung maschineller Lernverfahren umfasst ein Erkennen von Mustern und Gesetzmäßigkeiten in den Trainingsdaten. Nach der Trainingsphase kann die Erkennungseinheit beispielsweise in bisher unbekannten Bilddaten Merkmale oder Kenngrößen extrahieren. Nach der Trainingsphase erkennt die Erkennungseinheit beispielsweise basierend auf bisher unbekannten Bilddaten eine Artefaktart. Die Erkennungseinheit ist mit Artefakten aus der Gruppe aus streifenförmig, ringförmig, linienförmig, bandförmig, schattenförmig, verrauscht, strahlenförmig, spiralförmig und stufenförmig trainiert.

Die Artefaktart ist eine aus Physikartefakt, Defektartefakt und Bewegungsartefakt. Der Physikartefakt kann ein Aufhärtungsartefakt, ein Streuartefakt, ein Projektions-Abtastartefakt, ein Metallartefakt, ein (Calcium-)Blooming-Artefakt, ein Teil- oder ein Partialvolumenartefakt umfassen. Der Defektartefakt umfasst ein Artefakt bedingt durch einen Defekt des Bildaufnahmesystems, insbesondere des Röntgendetektors oder der Röntgenquelle. Der Bewegungsartefakt umfasst ein Patientenartefakt, ein Körperbewegungsartefakt des Untersuchungsobjekts, ein Herzbewegungsartefakt oder ein Atemartefakt. Die Artefaktart lässt einen direkten Rückschluss auf die Ursache des Artefakts zu. Der Physikartefakt kann auf eine physikalische Ursache zurückgeführt werden. Der Defektartefakt kann auf eine technische Ursache zurückgeführt werden. Der Bewegungsartefakt kann auf eine patientenbedingte Ursache zurückgeführt werden.

Das Ausgeben S15 kann ferner die Ausgabe einer technischen Ursache, einer physikalischen Ursache oder einer patientenbedingten Ursache der Artefaktart umfassen. Die technische Ursache ist eine aus Nichtlinearität oder Defekt des Detektors, Instabilität des Röntgenquellenfokus und fehlerhafte Kalibration. Eine Nichtlinearität kann beispielsweise durch eine veränderte Temperatur des Röntgendetektors oder einen veränderten Polarisationszustand bedingt sein. Die Instabilität des Röntgenquellenfokus kann beispielsweise durch Alterungseffekte der Röntgenquelle bedingt sein. Es kann die der technischen Ursache zugrunde liegende technische Komponente lokalisiert bzw. identifiziert werden, beispielsweise die Lage oder Nummer des defekten Detektormoduls.

Die Fig. 2 zeigt eine beispielhafte Ausführungsform des erfindungsgemäßen Verfahrens S2 zum Trainieren der Erkennungseinheit. Das Verfahren S2 zum Trainieren einer Erkennungseinheit zur Artefakterkennung in computertomographischen Bilddaten weist die aufeinanderfolgenden Schritte des Erzeugens S26 und des Trainierens S27 auf. Im Schritt des Erzeugens S26 werden Artefaktbilddaten mit mindestens einem Artefakt erzeugt. Im Schritt des Trainierens S27 wird die Erkennungseinheit basierend auf den Artefaktbilddaten trainiert.

Im Schritt des Erzeugens S26 wird basierend auf einer Auswahl aus einer Mehrzahl an möglichen Ursachen von Artefakten ein Artefakt durch Simulation auf existierende klinische Daten aufgeprägt, so dass Artefaktbilddaten gebildet werden. Im Schritt des Erzeugens S26 werden mittels Simulation artefaktbehaftete Bilddaten erzeugt. Es kann zusätzlich oder alternativ eine Mehrzahl an Artefakten auf die klinischen Daten aufgeprägt werden. Die Artefaktbilddaten können basierend auf artefaktfreien Bilddaten durch Manipulation der den Bilddaten zugrundeliegenden Rohdaten und einer erneuten Rekonstruktion der manipulierten Rohdaten erzeugt werden. Die Artefaktbilddaten umfassen den Effekt von beispielsweise Nichtlinearitäten im Detektor, Instabilitäten des Fokus oder fehlerhafter Kalibration bzw. fehlerhaften Kalibrationstabellen bezüglich des Röntgendetektors oder/und der Röntgenquelle. Auf diese Weise kann eine große Menge an Trainingsdaten erzeugt werden, wobei Bilddaten in fehlerfreier bzw. artefaktfreier Form und artfaktbehaftete Bilddaten mit unterschiedlichen Artefakten von den Trainingsdaten umfasst sind. Beispielsweise kann ein Artefakt basierend auf einem Defekt eines Detektormoduls auf Basis einer Nicht-Linearität des Signalverhaltens simuliert werden. Die Trainingsdaten können ferner die unverfälschten, artefaktfreien Bilddaten umfassen.

Im Schritt des Trainierens S27 bzw. Anpassens wird die Erkennungseinheit basierend auf den Trainingsdaten angepasst. Der Schritt des Trainierens S27 kann insbesondere ein maschinelles Lernverfahren umfassen, wobei auch eine statistische Methode, eine Abbildungsvorschrift oder ein künstlichen neuronalen Netz umfasst sein kann.

Die Artefaktbilddaten basieren bevorzugt auf simulierten Artefaktprojektionsdaten. Simulierte Artefaktprojektionsdaten umfassen insbesondere ausschließlich die Bildinformation des Artefakts. Es werden bevorzugt mit einem Computertomographiesystem aufgenommene Projektionsmessdaten bzw. Rohdaten verwendet. Es wird insbesondere durch Simulation ein Artefakt auf artefaktfreie mit einem Computertomographiesystem aufgenommene Projektionsmessdaten aufgeprägt.

Das Verfahren S2 kann ferner die Schritte des Aufnehmens S24, des Rekonstruierens S25 von artefaktfreien Projektionsmessdaten, des Auswählens S21 und des Rekonstruierens S23 von Artefaktbilddaten umfassen. Das Erzeugen S26 von Artefaktbilddaten kann die Schritte des Auswählens S21 der Artefaktart, des Simulierens S22 der Artefaktprojektionsdaten und des Rekonstruierens S23 von Artefaktbilddaten umfassen.

Im Schritt des Aufnehmens S24 werden im Wesentlichen artefaktfreien Projektionsmessdaten mittels eines Computertomographiesystems aufgenommen. Im Schritt des Rekonstruierens S25 werden im Wesentlichen artefaktfreien Bilddaten basierend auf den im Wesentlichen artefaktfreien Projektionsmessdaten rekonstruiert.

Im Schritt des Auswählens S21 wird mindestens eine Artefaktart ausgewählt. Im Schritt des Erzeugens S22 werden simulierte Artefaktprojektionsdaten für die mindestens eine Artefaktart erzeugt. Im Schritt des Rekonstruierens S23 werden Artefaktbilddaten basierend auf den im Wesentlichen artefaktfreien Projektionsmessdaten und den Artefaktprojektionsdaten rekonstruiert. Im Schritt des Trainierens S27 kann die Erkennungseinheit basierend auf den im Wesentlichen artefaktfreien Bilddaten und den Artefaktdaten trainiert werden.

Das Trainieren S27 oder Parametrieren kann ein Charakterisieren der Artefaktbilddaten oder/und der im Wesentlichen artefaktfreien Bilddaten umfassen. Das Charakterisieren kann das Bestimmen mindestens einer Kenngröße umfassen. Beispielsweise kann die Kenngröße innerhalb einer Region bestimmt werden. Das Trainieren S27 der Erkennungseinheit kann auf der Kenngröße basieren. Beispielsweise wird, insbesondere jedes, Schichtbild in beispielsweise 150 kreisförmige Regionen, sogenannte ROIs (Region of Interests), zerlegt, wobei die Anordnung und Radien dem Verlauf einer Iris im Auge nachempfunden sind. Für das Schichtbild können dann in den beispielsweisen 150 Regionen der mittlere HU-Wert, der minimale HU-Wert, der maximale HU-Wert oder eine andere Kenngröße als erste Kenngröße bestimmt werden.

Ferner kann jeweils ein Gradientenbild in X- und Y-Richtung aus dem Schichtbild abgeleitet werden. Das Gradientenbild kann den Gradienten basierend auf den HU-Werten in den Bilddaten bzw. dem Schichtbild angeben. In jedem Gradientenbild werden beispielsweise 150 ROI-Werte des Betrags des Mittelwerts des Gradientenwerts innerhalb einer Region als zweite Kenngröße für das Gradientenbild in X-Richtung bzw. als dritte Kenngröße für das Gradientenbild in Y-Richtung bestimmt. Auf diese Weise wird jedes Bild mit beispielsweise der Gesamtheit oder einer Teilmenge der ersten, zweiten und dritten Kenngrößen charakterisiert, sodass für ein Schichtbild beispielsweise die Gesamtheit der 450 ROI-Werte verwendet werden kann.

Aus einer Vielzahl von klinischen Bildern, beispielsweise 2000, können die Trainingsdaten erzeugt werden und jeweils mit und ohne Artefakt auf die oben beschrieben Weise charakterisiert werden. Basierend darauf kann die Erkennungseinheit mittels eines maschinell lernenden Verfahrens trainiert werden. Beispielsweise wird ein Random-(Decision-)Forest als Verfahren gewählt, welches als gewichte Summe der Ausgänge einer Vielzahl von kleineren Entscheidungsbäumen zu verstehen ist. Die Entscheidungsbäume können den Kenngrößen zugeordnet sein beziehungsweise die Kenngrößen können als Eingangsparameter für die Entscheidungsbäume verwendet werden. Typische Werte für die Anzahl der Entscheidungsbäume in einem Random-(Decision-)Forest liegen in der Größenordnung von 500 bis 1000.

Die Auswertung der Zuverlässigkeit bzw. Stabilität der trainierten Erkennungseinheit basiert beispielsweise mit Hilfe einer ROC-Analyse auf klassifizierten Bildern, welche nicht Teil des Trainings waren. Eine Analyse der Erstellung des Random-(Decision-)Forests erlaubt auch die Klassifikation der Eingabegrößen, beispielsweise eine Kenngröße, nach der jeweiligen Wichtigkeit für das Endergebnis.

Die Fig. 3 zeigt eine beispielhafte Ausführungsform der Regionen 20 in den Bilddaten. Das Schichtbild der Bilddaten ist in beispielsweise 150 kreisförmige Regionen 20, sogenannte ROIs (Regions of Interest), zerlegt, wobei die Anordnung und Radien dem Verlauf einer Iris im Auge nachempfunden sind. Der Durchmesser der Radien der Regionen 20 steigt vom Zentrum zum Rand des Schichtbildes hin an.

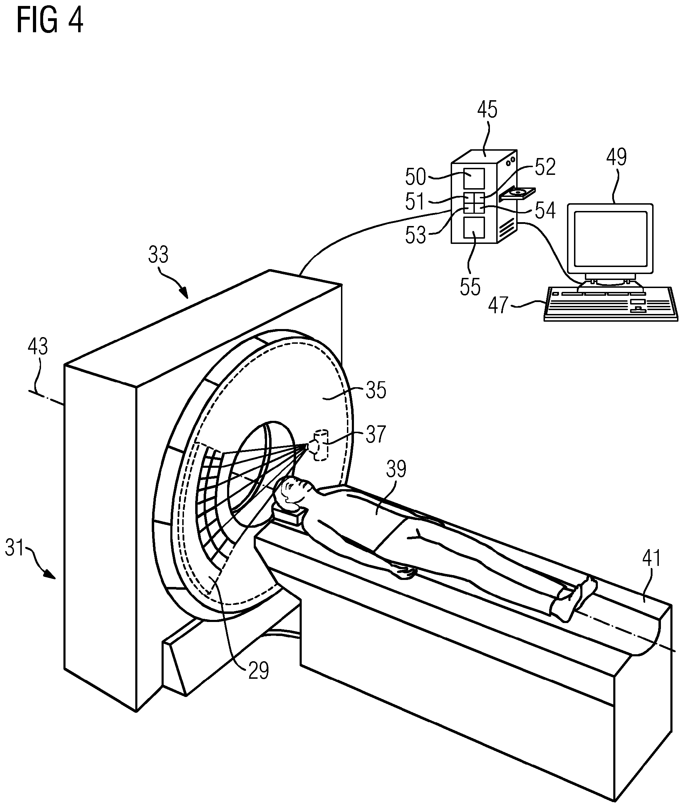

Die Fig. 4 zeigt eine beispielhafte Ausführungsform des erfindungsgemäßen Computertomographiesystems 31 zum Ausführen des erfindungsgemäßen Verfahrens zur Artefakterkennung. Das Computertomographiesystem 31 beinhaltet eine Gantry 33 mit einem Rotor 35. Der Rotor 35 umfasst eine Röntgenquelle 37 und die Detektorvorrichtung 29. Das Untersuchungsobjekt 39 ist auf der Patientenliege 41 gelagert und ist entlang der Rotationsachse z 43 durch die Gantry 33 bewegbar. Zur Steuerung und Berechnung der Schnittbilder sowie zur Durchführung des erfindungsgemäßen Verfahrens insbesondere zur Artefakterkennung wird eine Recheneinheit 45 verwendet. Eine Eingabeeinrichtung 47 und eine Ausgabevorrichtung 49 sind mit der Recheneinheit 45 verbunden. Die Recheneinheit 45 weist eine Aufnahmeeinheit 51 zum Aufnehmen von Projektionsmessdaten eines Untersuchungsbereichs eines zu untersuchenden Objekts 39, eine Rekonstruktionseinheit 52 zum Rekonstruieren von Bilddaten basierend auf den Projektionsmessdaten, eine Prüfeinheit 53 zum Prüfen auf Vorhandensein eines Artefakts in den Bilddaten mittels einer trainierten Erkennungseinheit, eine Erkennungseinrichtung 54 zum Erkennen einer Artefaktart eines vorhandenen Artefakts mittels einer trainierten Erkennungseinheit, und eine Ausgabeeinheit 55 zum Ausgeben der erkannten Artefaktart auf. Die Recheneinheit 45 kann die Trainingseinheit 50 umfassen. Ein computerlesbarer Datenträger mit Programmcode eines Computerprogramms kann von der Recheneinheit eingelesen werden bzw. von der Recheneinheit umfasst sein, um das Verfahren zum Ermitteln, wenn das Computerprogramm auf einem Computer bzw. der Recheneinheit 45 ausgeführt wird.

Obwohl die Erfindung im Detail durch das bevorzugte Ausführungsbeispiel näher illustriert wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (S1) zur Artefakterkennung in computertomographischen Bilddaten aufweisend die Schritte:
a. Aufnehmen (S11) von Projektionsmessdaten eines Untersuchungsbereichs eines zu untersuchenden Objekts (39),
b. Rekonstruieren (S12) von Bilddaten basierend auf den Projektionsmessdaten,
c. Prüfen (S13) auf Vorhandensein eines Artefakts in den Bilddaten mittels einer trainierten Erkennungseinheit,
d. Erkennen (S14) einer Artefaktart eines vorhandenen Artefakts mittels einer trainierten Erkennungseinheit, und
e. Ausgeben (S15) der erkannten Artefaktart.

2. Verfahren (S1) nach Anspruch 1, wobei die trainierte Erkennungseinheit auf einem maschinellen Lernverfahren, einer statistischen Methode, einer Abbildungsvorschrift, mathematischen Funktionen oder einem künstlichen neuronalen Netz basiert.

3. Verfahren (S1) nach einem der vorangehenden Ansprüche, wobei die Erkennungseinheit trainiert ist mit Artefakten aus der Gruppe aus streifenförmig, ringförmig, linienförmig, bandförmig, schattenförmig, strahlenförmig, verrauscht, spiralförmig und stufenförmig.

4. Verfahren (S1) nach einem der vorangehenden Ansprüche, wobei die Artefaktart eine aus Physikartefakt, Defektartefakt und Bewegungsartefakt ist.

5. Verfahren (S1) nach einem der vorangehenden Ansprüche, wobei das Ausgeben (S15) ferner eine technische Ursache, eine physikalische Ursache oder eine patientenbedingte Ursache der Artefaktart umfasst.

6. Verfahren (S1) nach Anspruch 5, wobei die technische Ursache eine aus Nichtlinearität oder Defekt des Detektors, Instabilität des Röntgenquellenfokus und fehlerhafte Kalibration ist.

7. Verfahren (S2) zum Trainieren einer Erkennungseinheit zur Artefakterkennung in computertomographischen Bilddaten aufweisend die Schritte:
a. Erzeugen (S26) von Artefaktbilddaten mit mindestens einem Artefakt, und
b. Trainieren (S27) der Erkennungseinheit basierend auf den Artefaktbilddaten.

8. Verfahren (S2) nach Anspruch 7, wobei die Artefaktbilddaten auf simulierten Artefaktprojektionsdaten oder artefaktbehafteten Projektionsmessdaten basieren.

9. Verfahren (S2) nach Anspruch 7 oder 8, ferner umfassend die Schritte:
a. Aufnehmen (S24) von im Wesentlichen artefaktfreien Projektionsmessdaten,
b. Rekonstruieren (S25) von im Wesentlichen artefaktfreien Bilddaten basierend auf den im Wesentlichen artefaktfreien Projektionsmessdaten,
c. Auswählen (S21) von mindestens einer Artefaktart,
d. Erzeugen (S22) von, insbesondere simulierten, Artefaktprojektionsdaten für die mindestens eine Artefaktart,
e. Rekonstruieren (S23) von Artefaktbilddaten basierend auf den Projektionsmessdaten und den Artefaktprojektionsdaten,
f. Trainieren (S27) der Erkennungseinheit zusätzlich basierend auf den im Wesentlichen artefaktfreien Bilddaten.

10. Verfahren (S2) nach einem der Ansprüche 7 bis 9, wobei das Trainieren (S27) ein Charakterisieren der Artefaktbilddaten oder/und der im Wesentlichen artefaktfreien Bilddaten umfasst.

11. Recheneinheit (45) zur Artefakterkennung in computertomographischen Bilddaten aufweisend Mittel zum Durchführen eines Verfahrens (S1) gemäß einem der Ansprüche 1 bis 6 aufweisend
a. Aufnahmeeinheit (51) zum Aufnehmen (S11) von Projektionsmessdaten eines Untersuchungsbereichs eines zu untersuchenden Objekts (39),
b. Rekonstruktionseinheit (52) zum Rekonstruieren (S12) von Bilddaten basierend auf den Projektionsmessdaten,
c. Prüfeinheit (53) zum Prüfen (S13) auf Vorhandensein eines Artefakts in den Bilddaten mittels einer trainierten Erkennungseinheit,
d. Erkennungseinrichtung (54) zum Erkennen (S14) einer Artefaktart eines vorhandenen Artefakts mittels einer trainierten Erkennungseinheit, und
e. Ausgabeeinheit (55) zum Ausgeben (S15) der erkannten Artefaktart.

12. Computertomographiesystem (31) mit einer Recheneinheit (45) nach Anspruch 11.

13. Computerprogramm mit Programmcode, um das Verfahren (S1) nach einem der Ansprüche 1 bis 6 durchzuführen, wenn das Computerprogramm auf einem Computer ausgeführt wird.

14. Computerlesbarer Datenträger mit Programmcode eines Computerprogramms, um das Verfahren (S1) nach einem der Ansprüche 1 bis 6 durchzuführen, wenn das Computerprogramm auf einem Computer ausgeführt wird.

15. Trainingseinheit (50) zum Trainieren einer Erkennungseinheit aufweisend Mittel zum Durchführen eines Verfahrens (S2) gemäß einem der Ansprüche 7 bis 10 aufweisend
a. eine Erzeugungseinheit zum Erzeugen (S26) von Artefaktbilddaten mit mindestens einem Artefakt, und
b. eine Trainingseinrichtung zum Trainieren (S27) der Erkennungseinheit basierend auf den Artefaktbilddaten.

16. Weiteres Computerprogramm mit weiterem Programmcode, um das Verfahren (S2) nach einem der Ansprüche 7 bis 10 durchzuführen, wenn das weitere Computerprogramm auf einem Computer ausgeführt wird.

17. Weiterer computerlesbarer Datenträger mit weiterem Programmcode eines weiteren Computerprogramms, um das Verfahren (S2) nach einem der Ansprüche 7 bis 10 durchzuführen, wenn das weitere Computerprogramm auf einem Computer ausgeführt wird.
